# EUROPEAN PATENT SPECIFICATION

(11) **EP 2 882 253 B1**
(45) Date of publication and mention of the grant of the patent: **29.05.2019**
(21) Application number: 13827071.5
(22) Date of filing: 30.07.2013
(51) Int. Cl.: H04B 7/26, H04W 88/02

(54) **MOBILE STATION**
MOBILSTATION
STATION MOBILE

(30) Priority: 06.08.2012 JP 2012174147
(43) Date of publication of application: 10.06.2015
(73) Proprietor: NTT DOCOMO, INC., Chiyoda-ku Tokyo 100-6150 (JP)
(72) Inventor: UCHINO, Tooru, Tokyo 100-6150 (JP); KIYOSHIMA, Kohei, Tokyo 100-6150 (JP); TAKEDA, Kazuaki, Tokyo 100-6150 (JP)
(74) Representative: Hoffmann Eitle
(86) International application number: PCT/JP2013/070560
(87) International publication number: WO 2014/024728

(56) References cited:
- EP-A1- 1 768 435
- EP-A1- 2 190 225
- JP-A- 2012 054 658
- US-A1- 2007 224 986
- RESEARCH IN MOTION UK LIMITED: 'Handling of a SR collision with ACK/NACK repetition' R2-121282, 3GPP TSG-RAN WG2 MEETING #77BIS 26 March 2012, XP050605862 Retrieved from the Internet: <URL:http://www.3gpp.org/ftp/tsg_ran/WG2_RL 2/TSGR2_ 77bis/Docs/R2-121282.zip>
- TOSHIHARU ONO: 'Experimental development of a memory card image viewer & temperature logger on TOPPERS' INTERFACE vol. 36, no. 5, 01 May 2010, pages 122 - 131, XP008176423

## Description

### TECHNICAL FIELD

The present invention relates to a mobile station.

### BACKGROUND ART

LTE (Long Term Evolution) currently defines PUSCH (Physical Uplink Shared Channel), PUCCH (Physical Uplink Control Channel), and PRACH (Physical Random Access Channel) as channels used in uplink, and defines SRS (Sounding Reference Signal) as signals transmitted in uplink.

PUSCH is a shared channel for transmitting U-plane data, C-plane data, and MAC (Media Access Control) layer control data from a mobile station UE.

PUCCH is a physical control channel for transmitting control information from a mobile station UE. The control information includes PUCCH-CQI (Channel Quality Indicator), PUCCH-SR (Scheduling Request), ACK/NACK in response to a downlink signal, and the like.

PRACH is a physical channel used for transmission of a scheduling request signal from a mobile station UE and establishment of synchronization in connection processing or re-connection processing.

SRS is a signal transmitted using uplink shared resources, and is used to report uplink quality.

A MAC layer function of a mobile station UE is configured to count the number of times of commanding a physical layer function to transmit over PRACH, PUSCH, or PUCCH-SR.

For example, the MAC layer function of the mobile station UE is configured to count the number of times of commanding the physical layer function to transmit over PRACH, and if the count number reaches a maximum transmission number, determine that "Random Access problem" has occurred and notify an upper layer function of the problem.

Alternatively, the MAC layer function of the mobile station UE is configured to count the number of times of commanding the physical layer function to transmit over PUSCH, and if the count number reaches a maximum transmission number, discard data (e.g., MAC-PDU) related to the transmission.

Alternatively, the MAC layer function of the mobile station UE is configured to count the number of times of commanding the physical layer function to transmit PUCCH-SR, and if the count number reaches a maximum transmission number, determine that the uplink synchronization is off and release dedicated resources (such as PUCCH and SRS) set up for the uplink.

### PRIOR ART DOCUMENT

### PRIOR ART DOCUMENTS

Non-patent document 1: 3GPP TS36.213
Non-patent document 2: R2-121282, 3GPP TSG-RAN WG2 Meeting 77bis, entitled "Handling of a SR collision with ACK/NACK repetition".

EP 2 190 225 A1 discloses a mobile station configured to transmit uplink data to a radio base station by using an uplink radio resource allocated by the radio base station. The mobile station is configured to report an amount of data remaining in a transmission buffer of the mobile station to the radio base station by use of the allocated uplink radio resource, upon completion of a predetermined number of times of allocation of the uplink radio resource to the mobile station by the radio base station.

EP 1 768 435 A1 discloses a transmission rate control method of controlling a transmission rate of uplink user data to be transmitted from a mobile station to a radio base station. The method includes: starting to transmit, at the mobile station, the uplink user data, at an initial transmission rate which is informed from a network or an initial transmission rate which has been already informed from the network; and increasing, at the mobile station, the transmission rate of the uplink user data, up to a predetermined transmission rate, on a basis of an increase rule of the transmission rate which is beforehand determined.

### SUMMARY OF THE INVENTION

However, a conventional LTE mobile communication system has a problem in that the MAC layer function may increment the counter in a case where the MAC layer function recognizes that an uplink signal has been transmitted, but the physical layer function has not actually transmitted the uplink signal.

Basically, when the aforementioned count number reaches the maximum transmission number, the MAC layer function determines that there is a problem in the physical layer function and releases resources or starts re-connection procedures. However, in the aforementioned case, the MAC layer function increments the counter irrespective of whether the transmission has actually been performed or not, and releases resources or starts re-connection procedures despite the fact that the physical layer function has no problem. This is not desirable in view of system stability.

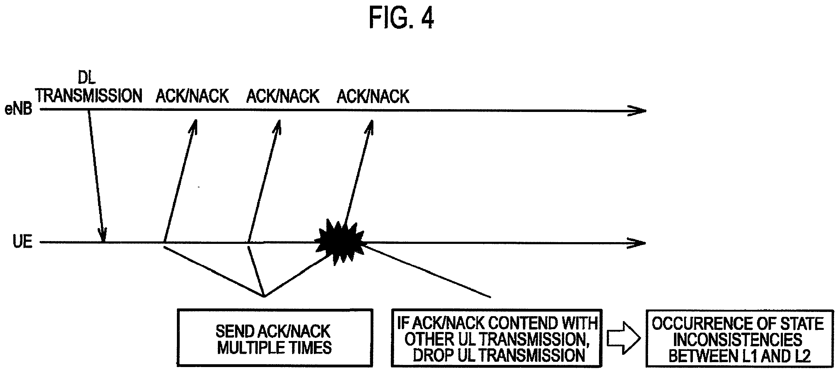

With reference to Figs. 4 to 6, concrete examples 1 to 3 of such a case will be described below.

As a first example, there is a conceivable case where "ACK/NACK repetition" defined in 3GPP TS36.213 is enabled.

When "ACK/NACK repetition" is enabled, delivery acknowledgement information (ACK/NACK) in response to a received downlink signal is transmitted multiple times to ensure that even a mobile station UE having poor uplink quality can feed back the delivery acknowledgement information.

The mobile communication system is configured such that a radio base station eNB gives a command to the mobile station UE, telling which resources to use to transmit the delivery acknowledgement information.

In such a case, as shown in Fig. 4, when the transmission of the delivery acknowledgement information by "ACK/NACK repetition" coincides with transmission of another uplink signal, the transmission of the delivery acknowledgement information by "ACK/NACK repetition" is prioritized, and the physical layer function of the mobile station UE does not transmit the other uplink signal.

As a result, this case has a problem in that the MAC layer function and the physical layer function of the mobile station UE have state inconsistencies, i.e., the MAC layer function recognizes that the uplink signal has been transmitted while the physical layer function has not actually transmitted the uplink signal.

As a second example, there is a conceivable case where "power limited case" occurs in "UL CA (Uplink Carrier Aggregation)" (see 3GPP TS36.213).

LTE-Advanced defines CA for performing broadband (high-speed) communication by bundling multiple CCs (Component Carriers).

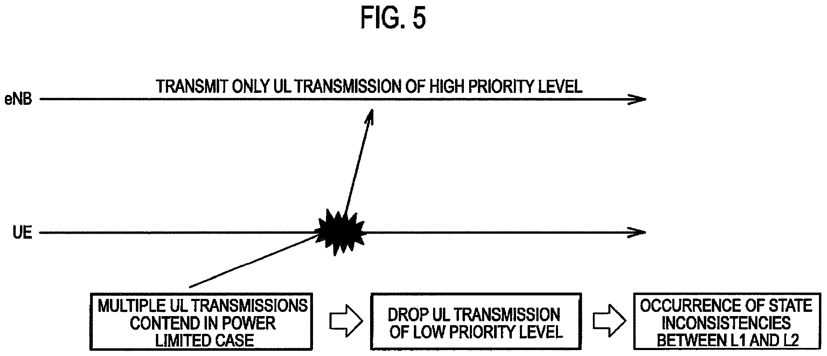

When "UL CA" is performed, the mobile station UE transmits uplink signals through multiple CCs. If the uplink quality is poor and does not reach desirable quality, i.e., if "power limited case" has occurred, the mobile station UE either transmits the uplink signals through the multiple CCs with the uplink transmission power for each CC decreased according to predetermined priority levels, or as shown in Fig. 5, does not transmit the uplink signals of low priority levels in the physical layer function.

As a result, this case has a problem in that the MAC layer function and the physical layer function of the mobile station UE have state inconsistencies, i.e., the MAC layer function recognizes that a certain uplink signal has been transmitted while the physical layer function has not actually transmitted the uplink signal.

As a third example, there is a conceivable case where transmissions of multiple uplink signals are simultaneously triggered in a mobile station UE having no capability of simultaneous transmissions.

In LTE-Advanced, CA achieves broadband (high-speed) communication through simultaneous transmissions and receptions using multiple CCs. However, some mobile stations UE cannot transmit uplink signals simultaneously depending on the capabilities of the mobile stations UE (or on the network configuration).

For example, the capability of simultaneous transmissions over PUCCH and PUSCH is an optional function in CA, and therefore some mobile stations UE may not have the capability of simultaneous transmissions over those channels.

It is basically an error case to trigger transmissions of multiple uplink signals in a mobile station UE having no capability of simultaneous transmissions. Hence, whether to prioritize one of the uplink signals or to transmit none of the uplink signals in the physical layer function depends on the configuration of each mobile station UE.

As a result, this case has a problem in that the MAC layer function and the physical layer function of the mobile station UE have state inconsistencies, i.e., the MAC layer function recognizes that a certain uplink signal has been transmitted while the physical layer function has not actually transmitted the uplink signal.

The present invention has been made in consideration of the above problems, and has an objective of providing a mobile station capable of avoiding a situation where the MAC layer function and the physical layer function have state inconsistencies, i.e., the MAC layer function recognizes that a certain uplink signal has been transmitted while the physical layer function has not actually transmitted the uplink signal, as well as avoiding the occurrence of resource release and start of re-connection procedures caused by such a situation.

The present invention provides a mobile station as set out in Claim 1, and an alternative mobile station as set out in Claim 2.

A first feature of the present invention is summarized as a mobile station including a layer 1 function and a layer 2 function. Here, the layer 1 function includes a transmission unit configured to transmit an uplink signal to a radio base station, the layer 2 function includes a transmission management unit configured to command the transmission unit to transmit the uplink signal, and a counter control unit configured to control a counter, and the counter control unit is configured to avoid incrementing the counter when the transmission unit does not transmit the uplink signal after the transmission management unit gives the command to the transmission unit.

### BRIEF DESCRIPTION OF THE DRAWINGS

Fig. 1 is a diagram of the overall configuration of a mobile communication system according to a first embodiment of the present invention.
Fig. 2 is a functional block diagram of a mobile station according to the first embodiment of the present invention.
Fig. 3 is a flowchart showing operation of the mobile station according to the first embodiment of the present invention.
Fig. 4 is a diagram illustrating problems in a
   conventional mobile communication system.
Fig. 5 is a diagram illustrating problems in the conventional mobile communication system.
Fig. 6 is a diagram illustrating problems in the conventional mobile communication system.

### MODE FOR CARRYING OUT THE INVENTION

### (Mobile Communication System According to the First Embodiment of the Present Invention)

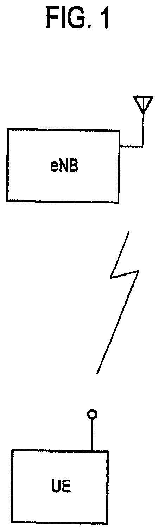

With reference to Figs. 1 to 3, a mobile communication system according to a first embodiment of the present invention will be described.

As shown in Fig. 1, the mobile communication system according to this embodiment includes a radio base station eNB supporting LTE-Advanced and a mobile station UE supporting LTE-Advanced.

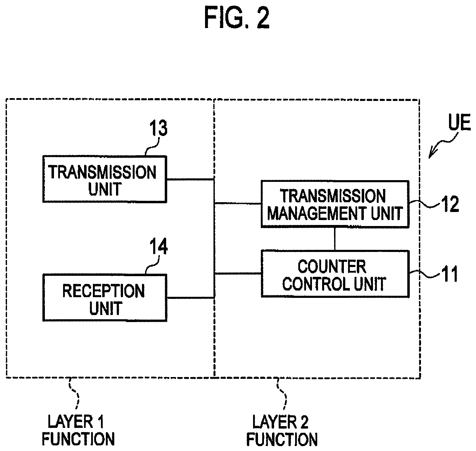

As shown in Fig. 2, the mobile station UE includes a layer 1 function (a physical layer function) and a layer 2 function (a MAC layer function).

The layer 1 function includes a transmission unit 13 and a reception unit 14, and the layer 2 function includes a counter control unit 11 and a transmission management unit 12.

The transmission unit 13 is configured to transmit an uplink signal to the radio base station eNB based on a command from the transmission management unit 12 of the layer 2 function. The reception unit 14 is configured to receive a downlink signal (such as, e.g., a scheduling signal) from the radio base station eNB.

The transmission management unit 12 is configured to command the transmission unit 13 of the layer 1 function to transmit an uplink signal.

The counter control unit 11 is configured to control a counter for managing a status of uplink signal transmission.

Specifically, the counter control unit 11 is configured to increment the counter when the transmission unit 13 transmits an uplink signal after the transmission management unit 12 commands the transmission unit 13 to transmit the uplink signal.

In other words, the counter control unit 11 is configured avoid incrementing the counter if the transmission unit 13 does not transmit an uplink signal after the transmission management unit 12 commands the transmission unit 13 to transmit the uplink signal.

The counter control unit 11 may be configured to monitor the status of uplink signal transmission by the transmission unit 13 of the layer 1 function.

In other words, the counter control unit 11 may be configured to increment the counter when detecting that the transmission unit 13 of the layer 1 completed transmission of the uplink signal.

The counter control unit 11 may be configured to avoid incrementing the counter when not detecting that the transmission unit 13 of the layer 1 completed transmission of the uplink signal, or when detecting that the transmission unit 13 of the layer 1 did not complete transmission of the uplink signal.

Alternatively, the transmission unit 13 of the layer 1 function may be configured to notify the counter control unit 11 of the layer 2 function when the transmission unit 13 transmitted the uplink signal to the radio base station eNB, and the counter control unit 11 may be configured to increment the counter in response to the notification.

For example, assume that the transmission management unit 12 of the layer 2 function commands the transmission unit 13 of the layer 1 function to transmit an uplink signal in the case shown in Fig. 4 where "ACK/NACK repetition" is enabled. In such a case, if a command to transmit delivery acknowledgement information by "ACK/NACK repetition" and the above command to transmit the uplink signal are given at the same time, the transmission unit 13 of the layer 1 function prioritizes the transmission of the delivery acknowledgement information by "ACK/NACK repetition" and does not transmit the uplink signal.

In such a case, the transmission management unit 12 of the layer 2 function may be configured to avoid incrementing the counter.

Further, even in a case where the transmission management unit 12 of the layer 2 function commands the transmission unit 13 of the layer 1 function to transmit an uplink signal, the transmission unit 13 of the layer 1 function does not transmit the uplink signal if "power limited case" occurs as shown in Fig. 5 and if the uplink signal has a low priority level.

In such a case, the transmission management unit 12 of the layer 2 function may be configured to avoid incrementing the counter.

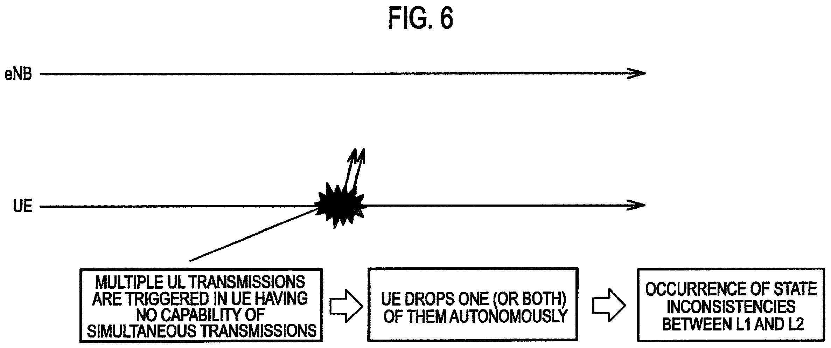

Further, even in a case where the transmission management unit 12 of the layer 2 function commands the transmission unit 13 of the layer 1 function to transmit an uplink signal, if the mobile station UE does not have the capability of simultaneous transmissions and is commanded to transmit multiple uplink signals as shown in Fig. 6, the transmission unit 13 of the layer 1 function prioritizes one of the uplink signals or transmits none of the uplink signals.

In such a case, the transmission management unit 12 of the layer 2 function may be configured to avoid incrementing the counter for the uplink signal not transmitted.

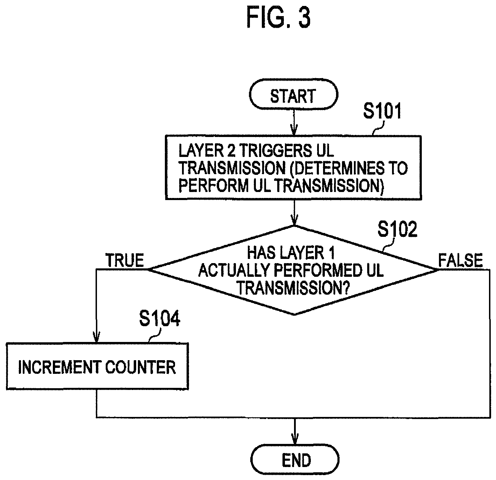

With reference to Fig. 3, operation of the mobile station UE according to this embodiment will be described.

As shown in Fig. 3, in Step S101, in the mobile station UE, the layer 2 function determines to transmit an uplink signal, and commands the layer 1 function to transmit the uplink signal.

In Step S102, the layer 2 function determines whether the layer 1 function has actually transmitted the uplink signal or not. The layer 2 function may determine this based on a monitor result of transmission status of the layer 1 function or based on a notification from the layer 1 function.

When determining that the uplink signal has been transmitted, the layer 2 function increments the counter in Step S104.

On the other hand, the layer 2 function does not increment the counter when determining that the uplink signal has not been transmitted.

With the invention according to this embodiment, the layer 2 function is configured to increment the counter for managing the status of uplink signal transmission only when determining that the layer 1 function has actually transmitted the uplink signal. This allows avoidance of a situation where the layer 1 function and the layer 2 function have state inconsistencies, i.e., the layer 2 function recognizes that a certain uplink signal has been transmitted while the layer 1 function has not actually transmitted the uplink signal, and therefore allows avoidance of a situation where resource release or start of re-connection procedures is performed even though the physical layer function is functioning well. Hence, system stability can be achieved.

The features of the above-described embodiment may also be expressed as follows.

A first feature of this embodiment is summarized as a mobile station UE including a layer 1 function and a layer 2 function. Here, the layer 1 function includes a transmission unit 13 configured to transmit an uplink signal to a radio base station eNB, the layer 2 function includes a transmission management unit 12 conf igured to command the transmission unit 13 to transmit the uplink signal, and a counter control unit 11 configured to control a counter, and the counter control unit 11 is configured to avoid incrementing the counter when the transmission unit 13 does not transmit the uplink signal after the transmission management unit 12 commands the transmission unit 13 to transmit the uplink signal.

In the first feature of this embodiment, the counter control unit 11 may be configured to monitor a status of transmission of the uplink signal by the transmission unit 13.

According to such a configuration, the problem of the present invention can be solved without any interaction provided between the layer 1 function and the layer 2 function, and with a low delay.

In the first feature of this embodiment, the transmission unit 13 maybe configured to, if transmitting the uplink signal, notify the counter control unit 11 of the transmission of the uplink signal, and the counter control unit 11 maybe configured to increment the counter in response to the notification.

According to such a configuration, the problem of the present invention can be solved, without any function provided in the layer 2 function to monitor the transmission status of the layer 1 function, by determining whether or not to avoid incrementing the counter with higher reliability according to a feedback from the layer 1 function.

Although a MAC layer function and a physical layer function are used as examples of the layer 1 function and the layer 2 function in this embodiment, the processing according to the present invention may be performed between any layers.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention. Therefore, the description of the specification is intended for illustrative explanation only and does not impose any limited interpretation on the present invention.

### INDUSTRIAL APPLICABILITY

As described above, the present invention can provide a mobile station capable of avoiding a situation where a MAC layer function and a physical layer function have state inconsistencies, i.e., the MAC layer function recognizes that a certain uplink signal has been transmitted while the physical layer function has not actually transmitted the uplink signal.

### EXPLANATION OF THE REFERENCE NUMERALS

- UE: mobile station
- eNB: radio base station
- 11: counter control unit
- 12: transmission management unit
- 13: transmission unit
- 14: reception unit

## Claims

1. A mobile station (UE) comprising a layer 1 function and a layer 2 function, wherein the layer 1 function includes
a transmission unit (13) configured to transmit an uplink signal to a radio base station,
the layer 2 function includes
a transmission management unit (12) configured to command the transmission unit (13) to transmit the uplink signal, and
a counter control unit (11) configured to control a counter,
the counter control unit (11) is configured to avoid incrementing the counter when the transmission unit (13) does not transmit the uplink signal after the transmission management unit (12) gives the command to the transmission unit (13), and
the counter control unit (11) is configured to monitor a status of transmission of the uplink signal by the transmission unit (13), and increment the counter when detecting that the transmission of the uplink signal is completed.

## Patentansprüche

1. Mobilstation (UE), umfassend eine Schicht-1-Funktion und eine Schicht-2-Funktion, wobei
die Schicht-1-Funktion einschließt
eine Übertragungseinheit (13), die konfiguriert ist, um ein Uplink-Signal an eine Funkbasisstation zu übertragen,
die Schicht-2-Funktion einschließt
eine Übertragungsverwaltungseinheit (12), die konfiguriert ist, um der Übertragungseinheit (13) zu befehlen, das Uplink-Signal zu übertragen, und
eine Zählersteuereinheit (11), die konfiguriert ist, um einen Zähler zu steuern,
die Zählersteuereinheit (11) konfiguriert ist, um ein Inkrementieren des Zählers zu vermeiden, wenn die Übertragungseinheit (13) das Uplink-Signal nicht überträgt, nachdem die Übertragungsverwaltungseinheit (12) der Übertragungseinheit (13) den Befehl gibt, und
die Zählersteuereinheit (11) konfiguriert ist, um einen Übertragungsstatus des Uplink-Signals durch die Übertragungseinheit (13) zu überwachen und den Zähler zu inkrementieren, wenn sie erkennt, dass die Übertragung des Uplink-Signals fertiggestellt ist.

## Revendications

1. Station mobile (UE) comprenant une fonction de couche 1 et une fonction de couche 2, dans laquelle
la fonction de couche 1 inclut
une unité de transmission (13) configurée pour transmettre un signal de liaison montante à une station de base radio,
la fonction de couche 2 inclut
une unité de gestion de transmission (12) configurée pour commander l'unité de transmission (13) pour transmettre le signal de liaison montante, et
une unité de commande de compteur (11) configurée pour commander un compteur,
l'unité de commande de compteur (11) est configurée pour empêcher une incrémentation du compteur quand l'unité de transmission (13) ne transmet pas le signal de liaison montante après que l'unité de gestion de transmission (12) transmet la commande à l'unité de transmission (13), et
l'unité de commande de compteur (11) est configurée pour surveiller un état de transmission du signal de liaison montante par l'unité de transmission (13), et incrémenter le compteur lors de la détection que la transmission du signal de liaison montante est terminée.
